# EUROPEAN PATENT APPLICATION

(11) **EP 1 283 485 A1**
(43) Date of publication of application: **12.02.2003**
(21) Application number: 02078184.5
(22) Date of filing: 30.07.2002
(51) Int. Cl.: G06F 17/30

(54) **Entry of physical documents in a digital back-end system**

(30) Priority: 08.08.2001 EP 01203006
(71) Applicant: Océ-Technologies B.V., 5914 CC Venlo (NL)
(72) Inventor: Van der Linden, Erwin Adrianus Richardus, 5922 AB Venlo (NL); Nacken, Peter Franciscus Marie, 5272 RK St. Michielsgestel (NL)
(74) Representative: van Meeteren, Arend Anthonie

(57) **Abstract**

Method and system for entry of physical documents into a digital back-end system (20). The system comprises:
- at least one scanner (10) for scanning a document and generating an associated document image file,
- a server (12) including an intermediate document store (13), connected to said scanner for storing a document image file together with a document identification (34) in a document file, and
- at least one input device (14) connected to the server (12) for entering an attribute file which comprises a set of document attributes (28, 30, 32; 44, 46, 48) accompanied by a document identification (34), wherein
the server (12) comprises a merging unit (18) for checking whether a document identification of one of the attribute files corresponds to a document identification of one of the document files and, if so, links the set of attributes to this document file.

## Description

The invention relates to a method for entry of physical documents into a digital back-end system, comprising: scanning a physical document in a scanner and generating an associated document image file; inputting attributes associated with the document; and storing the document image file together with its associated attributes in an intermediate digital document store.

In this connection, a back-end system is understood to comprise a filing, archiving or document management system or a workflow system. For instance, such a system may include one or more mass memory devices for storing digital images of a large number of documents. Each document has a number of attributes which may, for example, describe the contents or the type or category of the document, so as to facilitate search and retrieval, or may control the further processing of the document (e.g. online or hardcopy distribution to various destinations, printing, and the like).

Conventionally, the attributes are entered into the system at the time and place where the document data are scanned-in, so that the attributes are directly allocated to the scanned data.

US-A-4 970 554 discloses a method for printing documents, in which job tickets for a plurality of print jobs or documents can be prepared by a client at his own workstation. Each job ticket includes the printing instructions for the job in machine readable form and a job number identifying the job. The job tickets are stored in a job program file, and hard copies of the job tickets, on which the job numbers are encoded in machine readable form, are printed with a local printer. The hard copies of the job tickets are then combined with the respectively associated documents and are delivered to a reproduction center together with these documents. In the reproduction center, the document originals and the job tickets associated therewith are scanned, and the job numbers are used for retrieving the printing instructions for each job from the job program file, so that each job can be printed in accordance with the printing instructions. When the job has been printed, the printing instructions are either deleted or are stored for the purpose of preparing a new job ticket with a new job number.

It is an object of the invention to provide a method and system which offer more flexibility in the process of scanning documents for entry into a digital back-end system.

According to the invention, this object is achieved by a method comprising the steps of:
a) generating a unique document identification for a document to be processed,
b) when the document is scanned, storing the associated document image file together with the said document identification into the intermediate digital document store,
c) when the attributes for the document are entered, storing the same together with the document identification into the intermediate digital document store, and
d) checking for coincidence of the document identifications stored in steps (b) and (c) and consolidating a document and attributes having the same document identification in the intermediate digital document store.

The method according to the invention has the advantage that the step (b) in which the documents are scanned, which requires that the document originals are physically present at the scanner, and the step (c), in which the attributes are entered, can be fully uncoupled not only in space but also in time. This makes it very convenient for users to submit their documents to the system.

The invention is not limited to a certain time sequence of the steps (b) and (c). Thus, for example, a client may define a number of sets of attributes for a plurality of documents at his local workstation and may submit them online to the system and may then choose to bring or send the document originals to the scanner at a later time, whenever he finds it convenient to do so. If the document attributes include or are accompanied by instructions or parameters relating to the scan process or to a subsequent printing operation to be performed in a reproduction center, then this course of action may also have the advantage that the job scheduling task is facilitated for the operator in the reproduction center, because the instructions are available earlier. In an archiving application, it may also be regarded as an advantage that the attributes are searchable already in the intermediate document store even before the document has actually been scanned in.

When a client submits only a scan job or a copy job in which the printing of the copies is not urgent, the operator may for example decide to give priority to more urgent scan jobs and to keep the document originals of the less urgent jobs in the reproduction center until a scanner becomes available for handling the jobs. In a print-on-demand scenario, the operator may even postpone the scanning of the originals until a first print order occurs.

Conversely, the user may prefer to have the documents scanned first and to enter the associated attributes later.

It is possible that the document identification is generated and assigned automatically at the time of scanning, i.e. the steps (a) and (b) are performed almost concurrently, or that the document identification is generated and assigned automatically at the time when the attributes are entered, i.e. the steps (a) and (c) are performed almost concurrently. The identification that has been assigned to the document is then displayed or printed or notified to the user in any other suitable way, so that the user may refer to this identification when he has the document scanned or when he enters the attributes.

If the system comprises a plurality of scanners, which may be disposed at different locations, provisions have to be made to assure uniqueness of the automatically assigned document identifications. This may be achieved for example by interconnecting the scanners through a network or by using an identification format which includes the time and place where the document is scanned.

The requirement that the document identification is "unique" has the purpose to ensure that the documents and attributes are always combined in the correct way. When the step (d) has been performed for a pair of document and attributes having a matching identification, it would, in principle, be possible to delete the identification from the combined record, so that the same identification could be assigned to a new set of attributes or a newly scanned document. In this sense, a temporary uniqueness of the identification is sufficient. In many cases, it will however be preferable to require absolute uniqueness and to retain the identification as a unique key field or identifier for the records.

A system implementing the invention is provided with a server including a merging unit which will briefly be called "Merger" for performing the method step (d). This Merger may be formed by a software module running on a server of the back-end system or may be formed by a separate server component connected to the back-end system. Preferably, the Merger has its own storage facilities for temporarily storing the scanned document data and the sets of attributes until they are combined with each other and sent to the back-end system, e.g. for permanent storage.

The system further comprises one or more input devices allowing the users to enter the sets of attributes for their documents. Some of these input devices may be installed at the locations of the scanners, so that the users may enter the attributes when the documents are scanned-in. In a particularly preferred embodiment, however, most or all of the input devices are formed by client computers which are connected to the document store through a network system such as the Internet or an intranet. Then, the Merger preferably operates as a network server which responds to a request transmitted from a client by electronically transmitting a submission form description to the client. The submission form description is a piece of program code (e.g. HTML) which is interpreted in the client computer (e.g. by a web browser), so that a corresponding submission form is displayed on the screen of the client computer. The client user may then fill in the submission form by entering the document attributes and possibly other information and instructions and may retransmit the completed submission form to the Merger.

The submission form also includes the document identification which may have been assigned automatically by the Merger or may be entered by the user in a format which guaranties uniqueness. A possible format may be: <user ID><date><running number>. The user may also print a copy of the submission form and may attach it to the stack of document originals to be supplied to the scanner.

If the originals have been scanned already before the attributes are submitted, the user may indicate his personal user ID, for example, in his request for transmission of the submission form description. The Merger will then automatically search its local store for document identifications including this user ID and will list all scanned documents of this user in the submission form, for example in the form of reduced copies (thumb nails) of a first page of each document. The client user can then select the document identification of the document for which he wants to submit the attributes simply by clicking onto the corresponding thumb nail.

The invention is applicable for example for decentralised or central entry of paper documents into a document store (e.g. filing, archiving or document management system).

The decentralised system has several attached document scanners (possibly multi-functional devices for scanning, printing and copying). These scanners are placed at different locations in an office environment. If an office worker wants to enter a paper document in the document store, he walks to the closest document scanner (or multi-functional device) and enters his document. Document attribute entry can be carried out using a PC at his desk. In this application there is no longer a need to physically bring paper documents to a central "archiving" department for storage purposes.

Another possible application is the submission of reproduction jobs to a reproduction center. Again, the invention can be used both centrally and decentralised. In the last situation there is no longer a need to physically bring a paper document that should be reproduced to the reproduction department. The document is scanned at the nearest document scanner (or multi-functional device) using one of the described methods. In this application the document attributes may represent both administrative data about the reproduction order and print and finishing options. In this case, the invention is particularly useful in combination with an online submission system for print jobs as has been described in the European patent application No.1 132 808.

The invention can further be used to distribute scanned documents to any number of recipients. In this case, the document attributes represent the "addresses" (e.g. e-mail addresses or fax numbers) of the recipients.

In banking and insurance companies often workflow systems are in place. These systems often have a need for paper document entry. The invention can be used as a front-end for these workflow systems, enabling central or decentralised entry of paper documents with their attributes.

The invention is also related to a computer program element comprising computer program code for implementing the server that includes the Merger, and to a computer program product comprising the program element stored on a computer-readable medium.

Preferred embodiments of the invention will now be described in conjunction with the drawings, in which:
- Fig. 1: is a block diagram of a system according to the invention;
- Fig. 2: is a flow chart illustrating a method according to the invention;
- Fig. 3: is a flow chart illustrating a modification of the method shown in Fig. 2;
- Fig. 4: is a screen shot of an example of a submission form for entering document attributes;
- Fig. 5: is a screen shot of another example of a submission form for entering document attributes; and
- Fig. 6: is a screen shot of an example of a submission form for entering print specifications for a document.

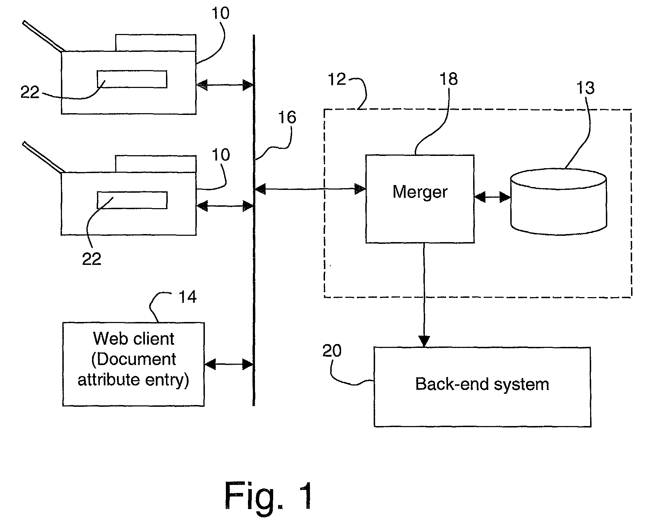

Figure 1 shows a possible schematic set-up of a system comprising one or more document scanners 10, a server 12 and one or more client computers 14 connected to the server 12 through a network 16, e. g. an intranet. The server 12 comprises a component that is called "Merger" 18 and a storage device 13 for intermediate storage of document image files and attribute files. It is connected to a back-end system 20 such as, for example, an archiving system, a workflow system of a company or the like.

In a centralised set-up, the scanner or scanners 10 will be installed at the location of the server 12 and may be connected to the Merger 18 by wirelines, although network connections are increasingly used also for short-range connections. In a decentralised set up, the scanners 10 will be installed at remote locations, i.e. closer to the work places of office workers using the system. Then, the scanners 10 are connected to the Merger 18 through the network 16 (intranet) or through a separate network. Each scanner 10 has an operating console 22 providing a facility to associate a (temporarily) unique document identification (ID) with each scanned document (see European patent application EP-A-1 096 775). The entered ID may for instance become a part of the filename of the document image file.

The client computers 14 serve as input devices for entering document attributes for the documents to be scanned. It may be assumed that these client computers 14 are workstations or personal computers which are located at the various work places of the users and on which a client application for entering the document attributes has been installed. It will be understood that such an application may be a web-client, but may also be any other type of client application might be used as an input device. Such input devices may be installed at the locations of the scanners 10 or may be integrated in multi-functional devices including a scan function.
The Merger 18 has the following functions:
- It provides a submission form description, i. e., a program code (in case of a web-client this will typically be HTML) to generate a document attribute entry form on the client computer 14.
- It receives and temporarily stores document image files from the scanners 10.
- It receives and temporarily stores document attributes received from the client computers 14.
- It consolidates document attributes and document image files having the same document ID and sends them, through an appropriate interface, to the connected back-end system 20.

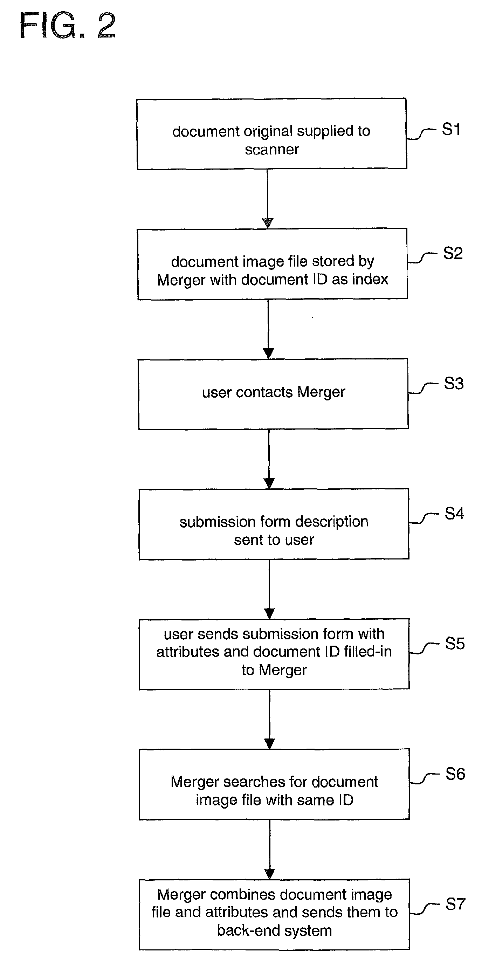

An example of a possible workflow is illustrated is Figure 2.

Step S1: A paper document is scanned using any of the document scanners 10 connected to the system. Before or after the actual scanning process, a document ID is entered at the console 22. This ID must be (temporarily) unique. A possible format for the ID could be: <user ID><date><running number>. It must be remembered by the scan operator, which document ID was used for which particular paper document.

Optionally, the document ID or at least a part thereof may be generated automatically in the scanner 10 or in the Merger 18 communicating therewith. For example, it may be sufficient for the user to enter his user ID, and the document ID is completed automatically by adding the current date and a running number. The complete document ID will then be displayed on the console 22, so that the scan operator or the user may note the document ID.

Step S2: The document image file, along with the document ID, is transferred to the Merger 18, where it will be temporarily stored in intermediate storage device 13. The document ID is used as an index for the document image file.

Step S3: Any time later, at any place where a client computer 14 is available, the user may start a procedure (steps S3 to S5) for entering the document attributes belonging to an earlier scanned document. To this end, the user sends a request to the URL (Universal Resource Locator) of the Merger 18.

Step S4: The Merger 18 responds with sending a submission form description to the client computer 14 from which the request had been sent. This submission form description is a piece of software that is interpreted by the browser software in the client computer 14 to generate, on the screen of the client computer, a submission form or attribute entry form in which the user may fill in the document attributes along with the document ID that has been memorised or noted in step S1.

Step S5: When the required data have been filled in and the user clicks a "submit" button on the submission form, this form including the document attributes and the document ID will automatically be transmitted to the merger 18.

Step S6: The Merger receives the attributes and checks whether a document image file having the same document ID is available in the temporary storage device 13. Obviously, the attributes may be be temporarily stored in the storage device 13 as well.

Step S7: If found, the document image file and the document attributes are automatically consolidated and entered into the back-end system 20.

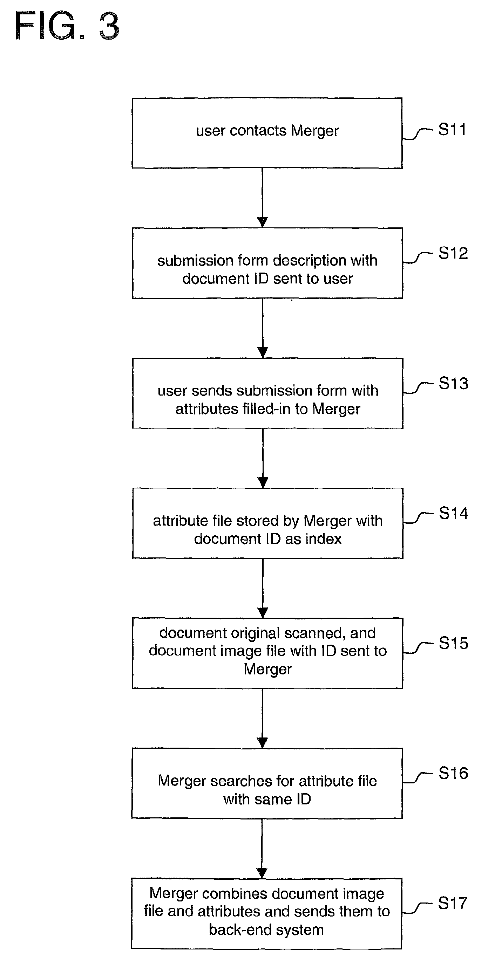

Figure 3 illustrates an alternative workflow which is also possible with the same system described above. In this case, document attributes are entered for a paper document that has not been scanned yet.

Step S11: As in step S3 above, a request is sent from a client computer 14 to the Merger 18.

Step S12: The submission form description is sent to the client computer. This submission form description may already include a document ID that has automatically been generated by the Merger 18. This document ID may be based on the user ID which has been transmitted together with the request in step S11 or which the user has been invited to enter in separate query.

Step S13: The user fills in the document attributes and sends the submission form to the Merger 18. If the document ID has not been generated automatically, it must be entered manually e. g. in the format <user ID><date><running number> which guarantees uniqueness. In any case, it must be remembered, which document ID was used for which particular paper document. For this reason the entry form with document attributes and document ID may be printed and attached to the paper document. As an alternative, a sticky note bearing the document ID may be attached to the paper document.

Step S14: The document attributes are temporarily stored in storage device 13 connected to the Merger 18. The document ID is used as an index for the document attributes.

Step S15: Any time later, the associated paper document is scanned using any of the scanners 10 connected to the system. Before or after the actual scanning process, the matching document ID is entered at the console 22. The document image file, along with the document ID, will be transferred to the Merger.

Step S16: The Merger receives the document image file, stores it in the intermediate storage device 13 and searches for matching document attributes associated with attribute files in the temporary store.

Step S17: If found, the document image file and the document attributes are automatically consolidated and entered into the back-end system 20.

In the second workflow, the entered document attributes along with a bar-code version of the document ID could be printed on a sheet of paper and attached to the paper document as a banner page. As an alternative for manual entry of the document ID in step S15, the banner page could be scanned along with the actual document and bar-code recognition could be applied, for instance in the Merger 18, to retrieve the document ID.

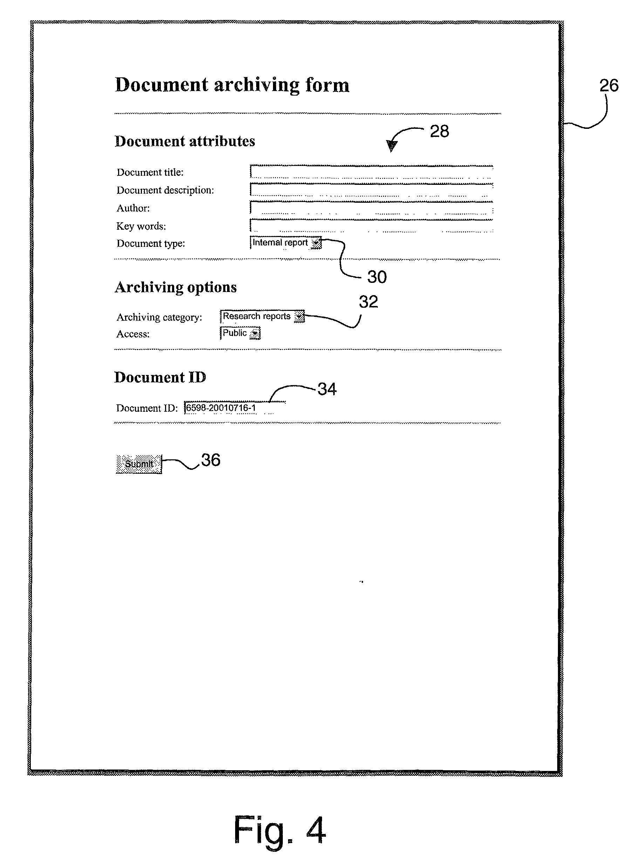

Figure 4 shows a document archiving form as a first example of a submission form 26 to be filled-in by the user. This form includes a number of fields 28 in which the user has to enter various types of document attributes such as the document title, a brief document description, the name of the author, and a selection of key words. A pull-down menu 30 permits to specify one of a number of predefined document types such as "internal report". Other pull-down menus 32 permit to select between predefined archiving options relating to the archiving category (e.g. research reports, newspaper articles, and the like) as well as the access type (public, restricted, ...).

The document ID has to be entered either automatically or manually in a field 34. In the example shown, the document ID is composed of a user ID ("6598"), the current date (July 16, 2001), and a running number ("1").

A submit-button 36 becomes active when all necessary information (especially the document ID) has been entered, and permits to send the submission form to the Merger 18.

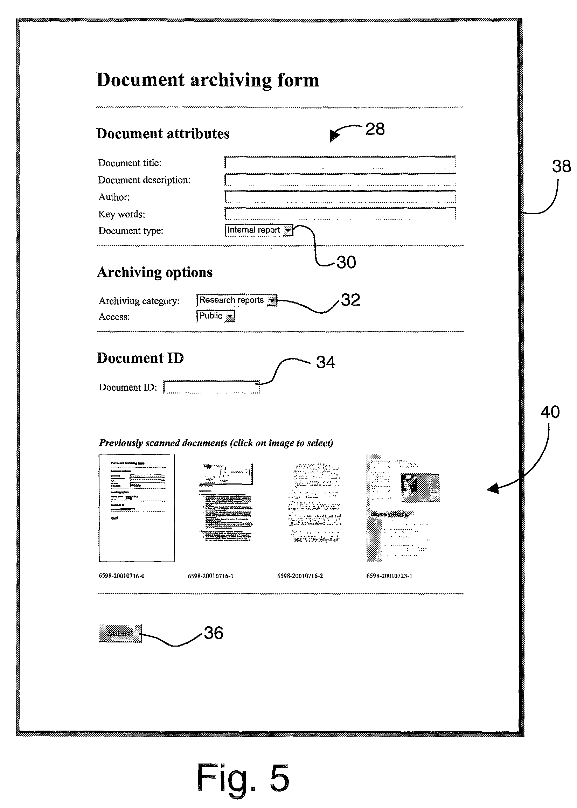

Figure 5 shows another example of a submission form 38 which is again a document archiving form. In addition to the items discussed above, this form includes a list 40 of previously scanned documents of the same user. Each of these documents is represented by a reduced copy (thumb nail) of the front page and by the associated document ID.

The submission form 38 is intended for the workflow illustrated in figure 3. It is assumed here that step S11 has the form of a logon procedure in which the user is asked to identity himself by his user ID. This user ID then permits the Merger 18 to search for all documents of this user that have been scanned previously and are still temporarily stored in the Merger. These documents will then be included in the list 40. In order to indicate the document to which the attributes entered in the fields 28 etc. belong , he simply clicks on one of the thumbnails in the list 40, and the corresponding document ID will automatically be entered in the field 34.

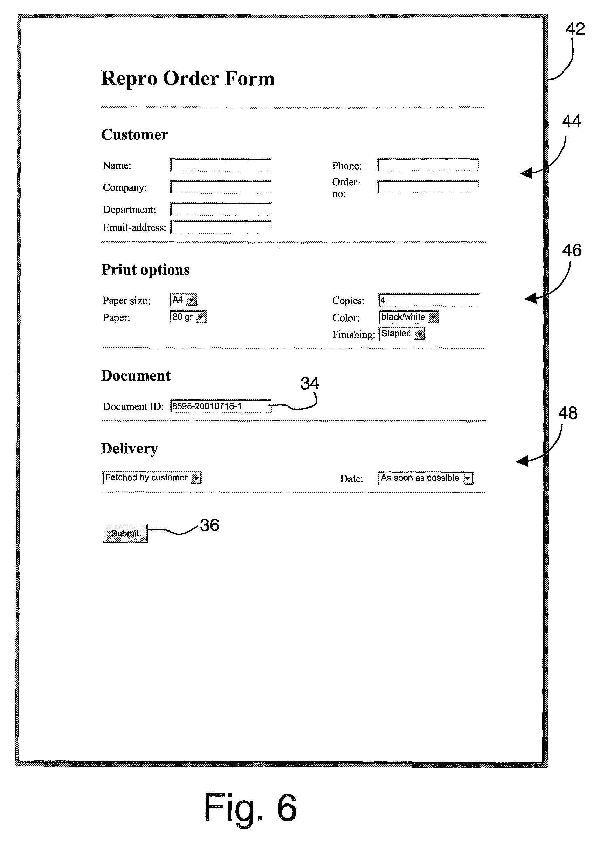

Figure 6 shows a repro order form as an other example of a submission form 42. Here, the document attributes consist of a set of data 44 relating to the customer, i.e. the owner of the document, and a set of data 46 specifying the way in which the document is to be printed. Other attribute data 48 relate to the desired delivery mode (e.g. "fetched by customer") and the scheduled time (e.g. "as soon as possible") for the delivery of the printed copies.
It will be understood that the form 42 may also include a list of previously scanned documents corresponding to the list 40 in figure 5.

Obviously, also other kinds of attributes may be contemplated for connecting to the document and entering in a submission form. The embodiments of submission forms given here are intended for explanatory purposes only.

If a number of different types of submission forms, such as the forms 26, 38 and 42, are available in the Merger 18, the user may indicate the required type of form in his request (step S3 or S11) or in the logon procedure.

Although the invention has been described with reference to the above exemplified embodiment, it will be clear to the skilled man that other embodiments are possible within the text of the claims. They are considered to be within the scope of protection of this patent.

## Claims

1. Method for entry of physical documents into a digital back-end system (20), comprising:
- scanning a physical document in a scanner (10) and generating an associated document image file,
- inputting attributes (28, 30, 32; 44, 46, 48) associated with the document, and
- storing the document image file together with its associated attributes in an intermediate digital document store (13),
**characterised by** the steps of:
b) when the document is scanned, storing the associated document image file together with a unique document identification (34) into the intermediate digital document store (13),
c) when the attributes for the document are entered, storing the same together with the same unique document identification (34) into the intermediate digital document store (13), and
d) checking for coincidence of the document identifications stored in steps (b) and (c) and consolidating a document and attributes having the same document identification (34) in the intermediate digital document store (13).

2. Method according to claim 1, wherein step c) is performed later than step b).

3. Method according to claim 1, wherein step b) is performed later than step c).

4. Method according to claim 1, also comprising the step of
a) automatically generating a unique document identification (34) for a document to be processed in reaction to initiation of one of steps b) and c), whichever is performed first, and reporting said unique document identification (34) to a device performing said first step.

5. Method according to claim 1, wherein the attributes and the associated document identification (34) are transmitted to the intermediate digital document store (13) through a data network (16).

6. Method according to claim 1, wherein step (c) comprises an electronic transmission of a submission form (26; 38; 42) description to a client (14), said submission form description being a program code that is interpreted on the side of the client to electronically create a submission form (26; 38; 42) capable of being filled-in electronically by the client (14) and allowing the client to interact with the intermediate document store (13) by entering information, including the attributes, into the submission form.

7. Method according to claim 6, wherein the document identification (34) includes a user identification and, when a user identified by his user identification requests transmission of the submission form description, the intermediate document store (13) is searched for previously scanned documents of this user, and a list (40) of these documents is included in the submission form (38).

8. System for entry of physical documents into a digital back-end system (20), comprising:
- at least one scanner (10) for scanning a document and generating an associated document image file,
- a server (12) including an intermediate document store (13), connected to said scanner for storing a document image file together with a document identification (34) in a document file, and
- at least one input device (14) connected to the server (12) for entering an attribute file which comprises a set of document attributes (28, 30, 32; 44, 46, 48) accompanied by a document identification (34), wherein
the server (12) comprises a merging unit (18) for checking whether a document identification of one of the attribute files corresponds to a document identification of one of the document files and, if so, links the set of attributes to this document file.

9. System according to claim 8, wherein a scanner (10) comprises input means (22) for entering a document identification to be included in a document file.

10. System according to claim 8 or 9, wherein the server (12) is connected to a back-end system (20) and wherein the merging unit (18) is arranged to temporarily store the document files and the attribute files, each accompanied by their associated document identification, in the intermediate document store (13) until these files are consolidated and then sends the consolidated file to the back-end system (20).

11. System according to claim 10, wherein the server (12) is arranged for automatically creating a document identification and assigning it to an attribute file when the same is entered earlier than a corresponding document file.

12. System according to claim 10 or 11, wherein the server (12) is arranged for automatically creating a document identification and assigning it to the document file when the same is entered earlier than the corresponding attribute file.

13. System according to claim 11, wherein the server (12) is arranged for reporting back the created document identification to the scanner (10).

14. System according to claim 12, wherein the server (12) is arranged for reporting back the created document identification to the input device (14).

15. System according to claim 8, wherein said server (12) is arranged for generating a digital submission form (26; 38; 42) description and sending it to a client (14) upon request, said submission form description being a program code that is interpreted on the side of the client to create a submission form (26; 38; 42) capable of being filled-in electronically by the client (14) and allowing the client to interact with the intermediate document store (13) by entering information, including the attributes, into the submission form.

16. System according to claim 15, wherein the document identification (34) includes a user identification and wherein server (12) is arranged for, in reaction to a user identified by his user identification requesting transmission of the submission form description, searching the intermediate document store (13) for previously scanned documents of this user, and including a listing (40) these documents in the submission form (38).

17. Server according to any one of claims 8 and 10 - 16.

18. A computer program element comprising computer program code to make a computer implement the server claimed in claim 17.

19. A computer program product comprising a computer program element stored on a computer-readable medium.
